# EUROPEAN PATENT APPLICATION

(11) **EP 1 915 897 A1**
(43) Date of publication of application: **30.04.2008**
(21) Application number: 07118491.5
(22) Date of filing: 15.10.2007
(51) Int. Cl.: A01D 41/06

(54) **Combine header with feed drum**

(30) Priority: 26.10.2006 US 586997
(71) Applicant: Deere & Company, Moline, IL 61265-8098 (US)
(72) Inventor: Bomleny, Duane M, Geneseo, IL 61254 (US); Salley, Gordon L, Moline, IL 61265 (US)
(74) Representative: Holst, Sönke

(57) **Abstract**

The invention pertains to a header (106) for an agricultural combine (100), comprising a platform (118); vertical back sheets (120) disposed along the back of the platform (118) having a central aperture (144) therebetween; left and right lateral conveyors (124, 126) with an endless belt (132); and a central conveyor (128) disposed between the inner ends of the left and right lateral conveyors (124, 126) to receive cut crop material therefrom and convey it rearward through the aperture (144).

It is proposed that feed drum (130) is at least partly disposed in the aperture (144), the feed drum (130) having a rotational axis, and further wherein a portion of the feed drum (130) extends forward of the back sheets (120). Alternatively or additionally, the ends (150, 152) of the feed drum (130) are tapered.

## Description

This invention relates to headers for agricultural combines. More particularly, it relates to headers with belt conveyors. Even more particularly, it relates to headers having feed drums for guiding cut crop material into a crop input area of a combine or feeder house.

Draper platforms are a type of header for an agricultural combine that use side to side conveyors rather than augers to carry cut crop material. These conveyors extend laterally from opposite lateral ends of the platform to a central region of the header. A central conveyor disposed between the two lateral conveyors receives crop from both the lateral conveyors and carries the crop rearward to the inlet of a feeder house which then carries the crop to the combine vehicle for threshing, separating and cleaning. The central conveyor is recessed slightly below the inner ends of the two side conveyors to thereby receive cut crop material that falls off the ends of the two lateral conveyors. Once the cut crop material falls onto the central conveyor, the central conveyor conveys it rearward into an aperture between the back sheets of the header. Once it passes rearward into the aperture, it is received by a feed drum. The feed drum is disposed behind the back sheets of the draper platform. Once cut crop material reaches the feed drum, several rotating mechanical fingers extending from the drum pull the left side and right side mats of cut crop material rearward, compressing it downward under the feed drum and rearward through the draper platform and into the mouth of the feeder house.

In recent years, draper platform headers have been increasing in width, carrying greater and greater volumes of cut crop material into the feeder house. As the mass of cut crop material has increased, the thickness of the mats of cut crop material on the two lateral conveyors has also increased. The current draper design (described above) does not turn and merge the two crop mats very well. The two crop mats arriving at the central conveyor tend to run directly into each other, bunch up into a thick mat which the central conveyor has difficulty moving uniformly backward.

What is needed, therefore is a different conveyor arrangement that engages the thick mat sooner and assists the central conveyor in moving the mat backward. It is an object of this invention to provide such a conveyor arrangement.

This object is achieved with the subject matter of claim 1. The dependent claims recite advantageous embodiments.

A header for a combine has two lateral conveyors, a central conveyor and a feed drum disposed at or near the rear of the central conveyor. The feed drum extends forward to a point ahead of an aperture between the back sheets of the header to engage cut crop material as it arrives at the central conveyor. The feed drum has a means for engaging the cut crop material while it is traveling laterally. It assists the central conveyor in turning the cut crop material rearward. The feed drum has tapered end regions that extend forward of the aperture, contact the cut crop material arriving from the lateral conveyors and push it downward onto the central conveyor. A portion of the feed drum extends forward of the back sheets.

The feed drum may extend forward of a rear edge of the endless belts of the left and right lateral conveyors. The header may further include a plurality of fingers extending therefrom that rotate together with the feed drum to convey cut crop material. The feed drum may have ends that are tapered. The feed drum ends may be tapered at an angle of between 35 and 55 degrees with respect to a rotational axis of the feed drum. The feed drum ends may be tapered at an angle of between 40 and 50 degrees with respect to a rotational axis of the feed drum. The feed drum may have a total longitudinally projected area, and each of the feed drum ends may have a longitudinally projected area of at least 50% of the total longitudinally projected area.

In accordance with another aspect of the invention, a header for an agricultural combine is provided having a laterally extending platform; laterally extending and generally vertical back sheets disposed along the back of the platform, on the left and right sides of the header, the back sheets having a central aperture therebetween; left and right lateral conveyors supported on the platform, each of said conveyors having an inner end and an endless belt; a central conveyor disposed between the inner ends of the left and right lateral conveyors to receive cut crop material therefrom and convey it rearward through the aperture; and a feed drum at least partially disposed in the aperture, the feed drum having a rotational axis, and further wherein the ends of the feed drum are tapered.

An embodiment of the invention is shown in the drawings, in which:
FIGURE 1 is a side view of an agricultural combine in accordance with the present invention.
FIGURE 2 is a top view of the agricultural combine of FIGURE 1 with the reel removed for clarity.
FIGURE 3 is a perspective view of the agricultural combine of FIGURE 1 showing the feed drum in greater detail and with the reel removed for clarity.
FIGURE 4 is a side view of the header taken at section line 4-4 in FIGURE 3.
FIGURE 5 is a front view of the feed drum perpendicular to the longitudinal axis of the feed drum.
FIGURE 6 is an end view of the feed drum parallel to the longitudinal axis of the feed drum.

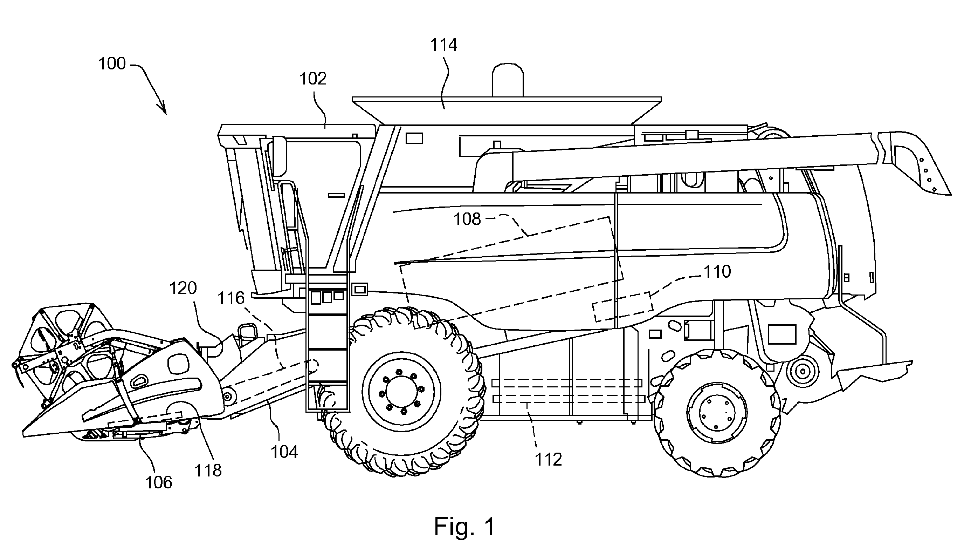

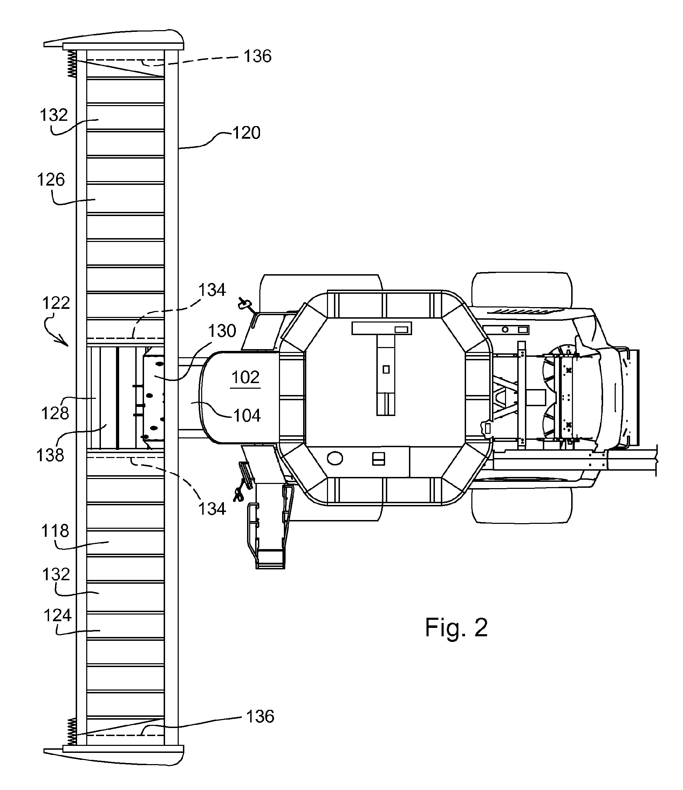

Referring now to FIGURES 1-2, an agricultural combine 100 is shown comprising a self-propelled vehicle 102, a feeder house 104 coupled to, extending forward from, and supported on the self-propelled vehicle 102, and a header 106 coupled to and supported on the front of the feeder house. The self-propelled vehicle 102 receives cut crop material from the feeder house 104 and conveys it to an internal threshing section 108, separating section 110, and cleaning section 112. Once cleaned, the self-propelled vehicle 102 deposits the separated grain into a grain tank 114. Feeder house 104 is pivotally coupled to the front of the self-propelled vehicle 100. It has a conveyor 116 extending across the bottom of the feeder house that conveys cut crop material rearward and into the threshing section 108 of self-propelled vehicle 102. Header 106 is coupled to and supported on the front of the feeder house 104. It has a platform 118 that extends generally horizontally across the width of the header, back sheets 120 that extend generally vertically across the width of the header 106, and a conveying system 122 comprising left and right lateral conveyors 124, 126, respectively, central conveyor 128, and feed drum 130.

Left and right lateral conveyors extend laterally across the width of the header 106 on the left and right sides of the header 106, respectively. Each of them comprises an endless belt 132 that is supported at its inner and outer ends on rollers 134, 136, respectively. The inner rollers are mounted adjacent to a longitudinal center line of the header 106 providing a gap in between in which the central conveyor 128 is disposed. The endless belts 132 are coupled to motors (not shown) that drive the top surface of the belts 132 inwardly from the outer ends of the header to a central region where the central conveyor is located.

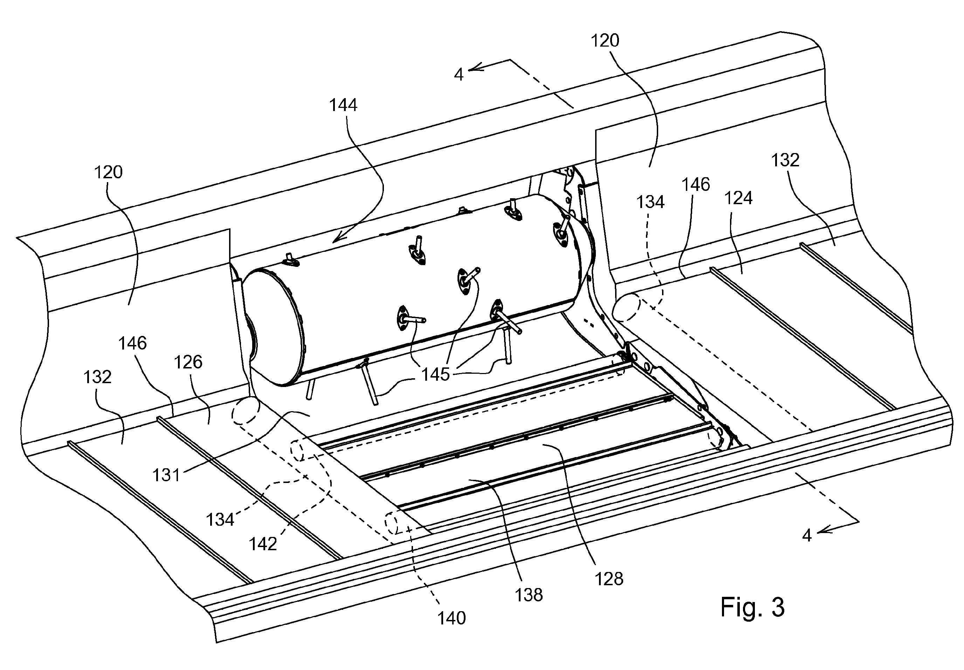

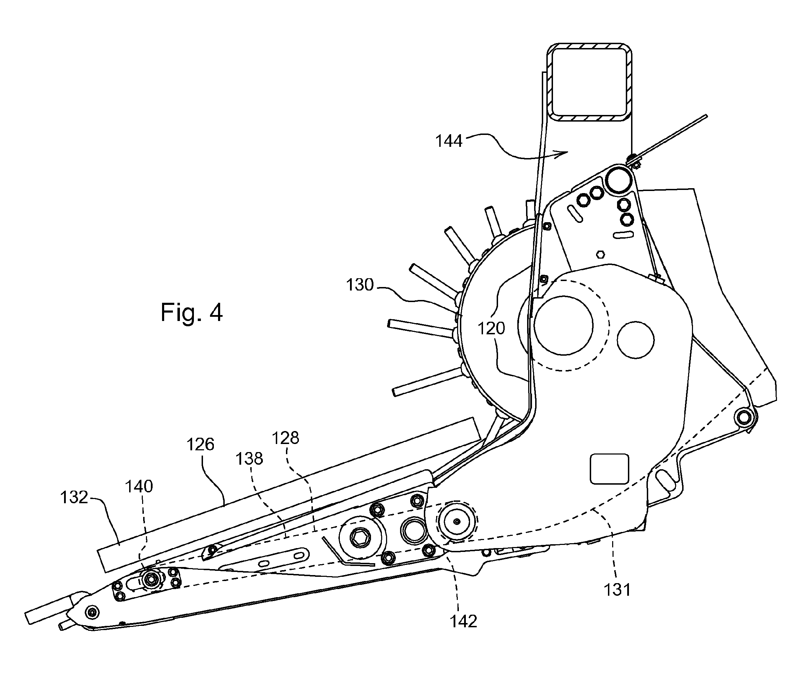

Referring now to FIGURES 3-4, the central conveyor 128 comprises an endless belt 138 that is supported on a laterally extending front roller 140 and laterally extending rear roller 142. The front and rear rollers are disposed forward of the generally vertical back sheets 120 and slightly below rollers 134 of the left and right side conveyors 124, 126, such that cut crop material arriving at the central conveyor must fall downward from the left and right lateral conveyors in order to rest on and engage the central conveyor.

Feed drum 130 extends laterally across the width of a central aperture 144 in the back sheets 120 of the header 106. It is partly disposed in the aperture 144 above the central conveyor 128 and just behind the rear roller 142. It has a plurality of fingers 145 extending therefrom that rotate together with the feed drum to convey cut crop material from the rear roller 142 of the central conveyor 128 rearward, underneath the feed drum on floor 131, and toward the feeder house.

A floor 131 is provided underneath the feed drum that extends side-to-side from one lateral conveyor to the other, and extends fore-and-aft from the rear of the central conveyor rearward completely underneath the feed drum 130.

Part of feed drum 130 extends forward of the generally vertical back sheets 120 of header 106. It extends forward of the rear edge 146 of endless belts 132. It is disposed such that a thick mat of cut crop material resting on either of the endless belts 132 can be carried inwardly by belts 132 and into abutment with the end of the feed drum 130 before turning rearward, going under the feed drum 130, and thence into the feeder house. By locating a front portion of the feed drum 130 forward of the back sheets, the fingers 145 of the feed drum 130 are able to engage the thick mats sooner, as they fall off the left and right lateral conveyors and onto center conveyor 128 and floor 131, and assist the central conveyor in moving the thick mats rearward.

Because the surface of the feed drum extends forward of the back sheets, if a standard right circular cylindrical feed drum was used, crop arriving at the feed drum on the left and right lateral conveyors would run into the blunt ends of the feed drum and block crop flow. For that reason the ends of the feed drum are tapered into a conical shape thereby deflecting the crop downward, underneath the feed drum 130, and onto the central conveyor 128 and floor 131 where it can be engaged by fingers 145 and carried rearward.

Referring now to FIGURES 3-6, the feed drum 130 has a left end 150 and a right end 152 that are tapered and generally conical. Left and right ends 150, 152 are disposed at least partially in front of the generally vertical back sheets 120 of the header and in the flow of cut crop material traveling laterally inward on endless belts 132. Left and right ends 150, 152 engage cut crop material traveling inwardly toward the central conveyor 128 along the rear edge 146 of belts 132 and deflect the cut crop material downward toward endless belt 138 and of central conveyor 128 and floor 131 where it can be engaged by fingers 145 and be carried backward through the aperture in the back sheets 120. This forward placement of the feed drum 130 permits the feed fingers 145 to engage the cut crop material sooner, and assisting conveyor 128 in turning the cut crop material from its lateral direction of travel on conveyors 124, 126 to a rearward direction of travel through aperture 145.

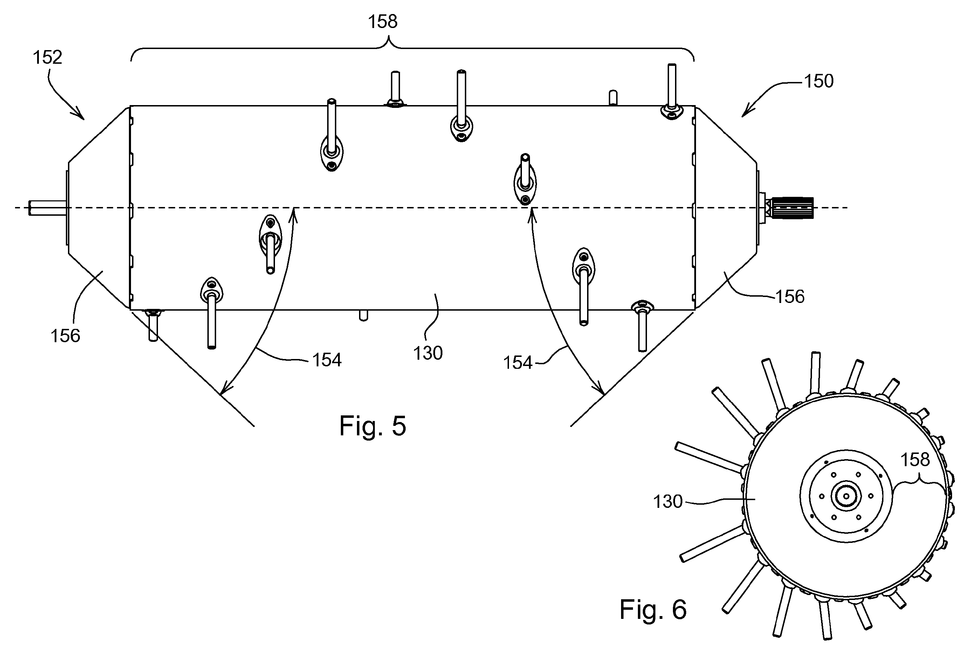

Referring to FIGURES 5-6, the taper angle 154 of the ends feed drum is preferably between 35 and 55 degrees with respect to the longitudinal and rotational axis 156 of the feed drum. It is more preferably between 40 and 50 degrees. It is even more preferably between 42 and 48 degrees. Referring to FIGURE 6, the area 157 of the tapered portions 150, 152 of the feed drum 130 when projected into an axial plane is preferably at least 30% of the total projected area of feed drum 130. More preferably it is at least 50% of the total projected area. Even more preferably it is at least 75% of the total projected area. The feed drum is preferably in the form of a right circular cylindrical center section 158 coupled to and disposed between the two tapered ends 150, 152. The two tapered ends 150, 152 are preferably in the form of frustums of cones that are coaxial with the longitudinal axis of the right circular cylindrical center section 158.

## Claims

1. A header (106) for an agricultural combine (100), comprising:
a laterally extending platform (118);
laterally extending and generally vertical back sheets (120) disposed along the back of the platform (118) on the left and right sides of the header (106), the back sheets (120) having a central aperture (144) therebetween;
left and right lateral conveyors (124, 126) supported on the platform (118), each of said conveyors (124, 126) having an inner end and an endless belt (132);
a central conveyor (128) disposed between the inner ends of the left and right lateral conveyors (124, 126) to receive cut crop material therefrom and convey it rearward through the aperture (144); and
a feed drum (130) at least partly disposed in the aperture (144), the feed drum (130) having a rotational axis, and further wherein a portion of the feed drum (130) extends forward of the back sheets (120).

2. The header (106) of claim 1, wherein the feed drum (130) extends forward of a rear edge of the endless belts (132) of the left and right lateral conveyors (124, 126).

3. The header (106) of claim 1 or 2, further comprising plurality of fingers (145) extending from the feed drum (130) that rotate together with the feed drum (130) to convey cut crop material.

4. The header (106) of claim 1 or 2, wherein the feed drum (130) has ends (150, 152) that are tapered.

5. The header (106) of claim 4, wherein the feed drum ends (150, 152) are tapered at an angle of between 35 and 55 degrees with respect to a rotational axis of the feed drum (130).

6. The header (106) of claim 4, wherein the feed drum ends (150, 152) are tapered at an angle of between 40 and 50 degrees with respect to a rotational axis of the feed drum (130).

7. The header of one of claims 4 to 6, wherein the feed drum (130) has a total longitudinally projected area, and further wherein each of the feed drum ends (150, 152) has a longitudinally projected area of at least 50% of the total longitudinally projected area.

8. A header (106) for an agricultural combine (100), comprising:
a laterally extending platform (118);
laterally extending and generally vertical back sheets (120) disposed along the back of the platform (118) on the left and right sides of the header (106), the back sheets (120) having a central aperture (144) therebetween;
left and right lateral conveyors (124, 126) supported on the platform (118), each of said conveyors (124, 126) having an inner end and an endless belt (132);
a central conveyor (128) disposed between the inner ends of the left and right lateral conveyors (124, 126) to receive cut crop material therefrom and convey it rearward through the aperture (144); and
a feed drum (130) at least partly disposed in the aperture (144), the feed drum (130) having a rotational axis, and further wherein the ends (150, 152) of the feed drum (130) are tapered.
